Europäisches Patentamt

European Patent Office

Office européen des brevets

(11) Veröffentlichungsnummer: **0 395 922**

**A1**

(12) **EUROPÄISCHE PATENTANMELDUNG**

(21) Anmeldenummer: **90106957.5**

(51) Int. Cl.⁵: **G01P 15/125**

(22) Anmeldetag: **11.04.90**

(30) Priorität: **24.04.89 DD 327879**

(43) Veröffentlichungstag der Anmeldung:
**07.11.90 Patentblatt 90/45**

(84) Benannte Vertragsstaaten:
**CH DE FR GB IT LI SE**

(71) Anmelder: **VEB MIKROELEKTRONIK "ROBERT HARNAU" GROSSRÄSCHEN**
**Karl-Liebknecht-Strasse 1**
**DDR-7805 Grossräschen(DD)**

(72) Erfinder: **Dittmann, Mathias, Dipl.-Ing.**
**Keplerstrasse 34**
**DDR-9030 Karl-Marx-Stadt(DD)**
Erfinder: **Küttner, Bernd, Dr.-Ing.**
**Hans-Beimler-Strasse 130**
**DDR-9061Karl-Marx-Stadt(DD)**
Erfinder: **Leyffer, Wolfgang, Dr.rer.nat.**

**Keplerstrasse 39**
**DDR-9030 Karl-Marx-Stadt(DD)**
Erfinder: **Lorenz, Peter, Dipl.-Ing.**
**Haydnstr. 10**
**DDR-9044 Chemnitz(DD)**
Erfinder: **Rauch, Manfred, Prof.Dr.sc.techn.**
**Abendleite 6**
**DDR-9081 Karl-Marx-Stadt(DD)**
Erfinder: **Wagner, Thomas, Dipl.-Ing.**
**Joh.-R.-Becher-Strasse 7**
**DDR-9590 Zwickau(DD)**
Erfinder: **Wetzel, Martin, Dipl.-Ing.**
**Hilbersdorfer Str. 50**
**DDR-9075 Chemnitz(DD)**

(74) Vertreter: **Lehn, Werner, Dipl.-Ing. et al**
**Hoffmann, Eitle & Partner Patentanwälte**
**Arabellastrasse 4**
**D-8000 München 81(DE)**

(54) **Kapazitiver mikromechanischer Beschleunigungssensor.**

(57) Die Erfindung betrifft einen kapazitiv arbeitenden und nach mikromechanischer Fertigungstechnologie hergestellten Beschleunigungssensor.

Er ist ueberall dort anwendbar, wo Beschleunigungen an Maschinen, Geraeten und Bauteilen ermittelt und daraus Steuerfunktionen abgeleitet werden muessen. Aufgabe der Erfindung ist es, einen Beschleunigungssensor zu schaffen, mit dem eine schnelle Eindeutigkeit der Nullstellung erreicht wird, der eine minimale Schwingungsneigung aufweist und der sich durch hohe Empfindlichkeit und Richtungsstabilitaet auszeichnet.

Der erfindungsgemaesse Beschleunigungssensor besteht aus einem Anschlagdeckel (1), der einseitig symmetrisch eine Vertiefung besitzt, in der Erhoehungen (1a) vorhanden sind, einem Federteil, das beidseitig ganz oder teilweise mit einer elektrisch leitfaehigen Schicht versehen ist und aus Rahmen (2c), Federn (2a) und seismischer Masse (2b) besteht, wobei jede Feder (2a) die Form eines Polygonzuges hat, dessen Strecken sich gegenseitig weder beruehren noch schneiden und stets den gleichen Drehsinn beibehalten, wobei mittig des Federteils eine seismische Masse (2b) angeordnet ist, die bezueglich ihres Masseschwerpunktes an mindestens 2 Federn (2a) aufgehaengt ist und einem Elektrodendeckel (3), der einseitig symmetrisch mit einer Festelektrode (4), die mit einer elektrisch nicht leitfaehigen Schicht (5) abgedeckt ist, versehen ist.

Fig. 1

## Kapazitiver mikromechanischer Beschleunigungssensor

Die Erfindung bezieht sich auf einen kapazitiv arbeitenden und nach mikromechanischer Fertigungstechnologie hergestellten Beschleunigungssensor, der zur Umwandlung von auf ihn wirkenden Beschleunigungen in elektrische Signale dient. Er besteht aus mehreren Einzelteilen, die mit Hilfe einer anodischen Verbindungstechnik durch Anlegen einer ausseren elektrischen Spannung bei erhoehter Temperatur oder durch geeignete Klebeverfahren miteinander verbunden werden.

Da Beschleunigungssensoren an Geraeten und Maschinen notwendig sind, um diese in ihrer Funktion zu steuern oder um Havariesituationen zu signalisieren, sind sie ueberall dort anwendbar, wo Beschleunigungen von Maschinen, Geraeten und Bauteilen ermittelt und daraus Steuerfunktionen abgeleitet werden muessen. Solche Beschleunigungssensoren sind unteranderem fuer den Einsatz in der Konsumgueterindustrie sowie im Werkzeug- und Textilmaschinenbau und Fahrzeugbau geeignet.

Beschleunigungssensoren, die auf kapazitiver Basis arbeiten und nach mikromechanischer Fertigungstechnologie hergestellt werden, sind bekannt. Ein solcher Beschleunigungssensor ist durch die DE-OS 3223987 offengelegt. Dieser weist eine Klappe auf, die an einem Traeger ueber zwei Torsionshalterungen befestigt ist, die symmetrisch und in Verlaengerung einer Kante der Klappe angeordnet sind. Die Ermittlung der Beschleunigung erfolgt durch Messen der entsprechenden Aenderung der Kapazitaet zwischen Klappe und der Elektrode. Ein derartiger Sensor erzeugt eine Kapazitaetsaenderung, die eine relativ komplizierte Funktion der Beschleunigung ist, weil sich der Luftspalt zwischen Klappe und der Elektrode nur keilfoermig aendert. Ferner sind bei dieser Torsionsaufhaengung grosse Querempfindlichkeiten zu erwarten.

Ein weiterer Beschleunigungssensor wird durch die DE-OS 3625411 beschrieben. Dieser weist eine Beschleunigungsplatte mit einer geraden Anzahl von symmetrisch, bezueglich der Mittelebene zwischen Ober- und Unterseite der Beschleunigungsplatte, angeordneten Biegebaendern auf. Die Beschleunigungsplatte selbst oder die auf ihrer Ober- und Unterseite flaechenhaft aufgebrachte Leiter bilden die einen Elektroden von zwei Plattenkondensatoren. Die Gegenelektroden sind auf den gegenueberliegenden Flaechen der Deckplatten angeordnet. Dieser Sensor ermoeglicht zwar eine parallele Annaeherung bzw. Entfernung der Kondensatorflaechen und damit eine gegenlaeufige Veraenderung der Plattenkapazitaet der beiden Kondensatoren, neigt aber durch die federnde Mittellage der Beschleunigungsplatte zu unerwuenschten Schwingungen, wodurch eine eindeutige Nullstellung nicht sofort erreicht wird. Durch die starre raeumliche Anordnung der Biegebaender an der Ober- und Unterseite der Beschleunigungsplatte lassen sich geringe Beschleunigungen gar nicht oder nur bedingt messen.

Hier will die Erfindung Abhilfe schaffen.

Die Aufgabe der Erfindung ist es, einen Beschleunigungssensor zu schaffen, mit dem eine schnelle Eindeutigkeit der Nullstellung erreicht wird, der nur eine minimale Schwingungsneigung aufweist, der sich durch hohe Empfindlichkeit und Richtungsstabilitaet auszeichnet und in grossen Stueckzahlen kostenguenstig hergestellt werden kann.

Erfindungsgemaess wird die Aufgabe mit einem kapazitiv arbeitenden mikromechanischen Beschleunigungssensor geloest, der aus den Einzelteilen Anschlagdeckel, Federteil und Elektrodendeckel besteht. Der Anschlagdeckel besitzt einseitig symmetrisch teilweise eine Vertiefung, in der Erhoehungen angeordnet sind, wobei die Erhoehungen aus mindestens 3 Hoeckern, die vorzugsweise auf einer Kreisbahn in gleichmaessigen Abstaenden zueinander angeordnet sind oder aus 2 Schienen bestehen und so angebracht sind, dass sie gegenueber der seismischenen Masse angeordnet sind.

Das beidseitig ganz oder teilweise mit einer elektrisch leitfaehigen Schicht beschichtete Federteil, welches aus Rahmen, Federn und seismischer Masse besteht, wobei jede Feder in Form eines ebenen Polygonzuges, der aus einer Folge von n geradlinigen Strecken $l_1, l_2 \ldots l_n$ besteht, ausgebildet ist, wobei der Anfangspunkt der Strecke $l_{k+1}$ mit dem Endpunkt der Strecke $l_k$ fuer $k = 1, 2, 3\ldots$ n-1 uebereinstimmt und der Richtungssinn der Strecke $l_{k+1}$ aus der Strecke $l_k$ dadurch gewonnen wird, indem man die Strecke $l_k$ um einen gerichteten konstanten Winkel dreht, wobei das Drehzentrum der gemeinsame Punkt von $l_k$ und $l_{k+1}$ ist. Der Drehwinkel bleibt fuer den gesamten Polygonzug konstant, wobei sich die einzelnen Polygonstrecken gegenseitig weder durchdringen noch beruehren. Mittig des Federteils ist als Funktionselement eine seismische Masse angeordnet, die bezueglich ihres Masseschwerpunktes an mindestens 2 Federn aufgehaengt ist, die mit dem Rahmen des Federteils verbunden sind, wobei die seismische Masse gegenueber dem Rahmen des Federteils ein geringeres Niveau aufweist. Anstelle der Federn ist es moeglich, als Funktionselement eine geschlos sene oder mit Durchbruechen versehene duennwandige Folie zu verwenden, die den Rahmen mit der seismischen Masse verbindet. Der Elektrodendeckel ist einseitig symmetrisch mit einer Festelektrode versehen, die mit einer elektrisch nicht leitenden Schicht abgedeckt ist. Es hat sich als vorteilhaft erwiesen, dass der Rand des Anschlagdeckels gegenueber den Erhoehungen ein geringeres Niveau aufweist. Damit ist es moeglich, die Einzelteile Anschlagdeckel und Federteil unter Vorspannung der seismischen Masse zu fuegen. Weiterhin besteht die Moeglichkeit, dass die seisische Masse die gleiche Dicke wie das Federteil besitzt und dafuer der Elektrodendeckel symmetrisch mit einer grubenfoermigen Vertiefung versehen ist, auf dessen Grund sich die Festelektrode befindet. Damit ist es moeglich, den Sensor an bestimmte Beschleunigungsfaelle anzupassen sowie seine Empfindlichkeit zu variieren. Um den Beschleunigungssensor gegen aeussere elektrische Felder unempfindlich zu machen bzw. abzuschirmen, sind die Aussenflaechen von Anschlagdeckel und Elektrodendeckel mit einer elektrisch leitfaehigen Schicht versehen und beide Potentiale miteinander verbunden. Die Einzelteile des kapazitiv arbeitenden Beschleuni-, gungssensors bestehen vorteilhafterweise aus Glas, Keramik oder Silizium und werden vorzugsweise nach einer mikromechanischen Fertigungstechnologie und Aetztechnik hergestellt und mit Hilfe einer anodischen Verbindungstechnik durch Anlegen einer aeusseren elektrischen Spannung bei erhoehter Temperatur gefuegt oder durch geeignete Klebeverfahren verbunden. Beim Kleben werden die an den Stirnseiten des Anschlagdeckels, des Federteils und des Elektrodendeckels vorhandenen und technologisch bedingten Einbettungen genutzt, um eine stabile Verbindung zu erzielen, indem diese mit dem Klebemedium ausgefuellt werden. Durch die Anordnung der zentral an speziellen Federn aufgehaengten seismischen Masse besitzt der erfindungsgemaesse Reschleunigungssensor eine hohe Empfindlichkeit, die von bekannten Sensoren nicht erreicht wird. Der einseitige Anschlag der seismischen Masse bedingt eine genaue Nullpunktlage derselben, die sehr schnell erreicht wird, da durch die Vorspannung der seismischen Masse praktisch keine Schwingungsneigung auftritt.

Die Erfindung wird nachfolgend anhand eines Ausfuehrungsbeispieles naeher erlaeutert.

In den dazugehoerigen Zeichnungen zeigen:

Fig. 1 Schnitt durch den erfindungsgemaessen Beschleunigungssensor mit polygonzugaehnlichen Federn

Fig. 2 Schnitt durch den erfindungsgemaessen Beschleunigungssensor mit grubenfoermiger Vertiefung im Elektrodendeckel

Fig. 3 Draufsicht auf das Federteil mit polygonzugaehnlichen Federn, die in L-Form ausgebildet sind.

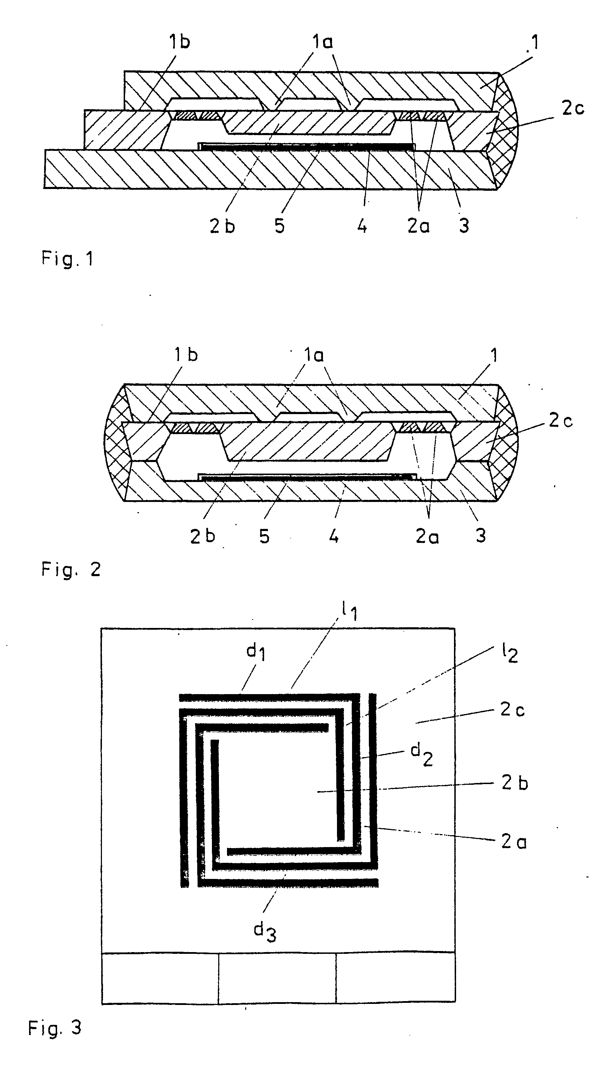

Der erfindungsgemaesse Beschleunigungssensor besteht entsprechend Fig. 1 und Fig. 2 aus einem Anschlagdeckel 1 mit auf der Innenseite angeordneten Erhoehungen 1a, die in Form von Hoeckern ausgebildet sind, einem Federteil mit einer in diesem zentrisch angeordneten seismischen Masse 2b, die ueber Federn 2a mit dem Rahmen 2c verbunden ist und einem Elektrodendeckel 3, der einseitig mit einer Festelektrode 4 versehen ist, die mit einer elektrisch nicht leitenden Schicht 5 verdeckt ist. Die Erhoehungen 1a im Anschlagdeckel 1 sind so angeordnet, dass sie fuer die seismische Masse 2b eine 3-Punkt-Auflage bilden. Die Auflageflaeche ist dabei moeglichst klein zu halten. Das Federteil ist beidseitig mit einer elektrisch leitfaehigen Schicht versehen. Die Federn 2a aehneln einem Polygonzug mit konstanter Dicke, der aus den Strecken $l_1$ und $l_2$ besteht, wobei der Endpunkt der Strecke $l_1$ mit dem Anfangspunkt der Strecke $l_2$ uebereinstimmt und der Richtungssinn der Strecke $l_2$ aus der Strecke $l_1$ dadurch gewonnen wird, indem man die Strecke $l_2$ um den gerichteten Winkel $d = +90°$ dreht, wobei das Drehzentrum der gemeinsame Punkt von $l_1$ und $l_2$ ist. Die seismische Masse 2b wird ueber 4 dieser L-foermigen Federn 2a, die an den 4 Ecken der quadratisch ausgefuehrten seismischen Masse 2b angeordnet sind, mit dem Rahmen 2c des Federteils verbunden. Die 4 L-foermigen Federn 2a des Federteils entstehen, indem aus dem Federteil 4 U-foermige, um 90° versetzte und ineinander verschachtelte Durchbrueche herausgearbeitet werden. Bei einer quadratischen Grundflaeche der seismischen Masse 2b muss jedes Teilstueck der U-foermigen Durchbrueche eine unterschiedliche Laenge aufweisen, fuer die gilt:

$d_1 > d_2 > d_3$ . Fig. 3

Die Unterseite der seismischen Masse 2b ist gegenueber der Unterseite des Rahmens 2c etwas zurueckgesetzt, so dass zwischen seismischer Masse 2b und der elektrisch leitfaehigen Schicht am Elektrodendeckel 3 in Ruhelage ein Spalt entsteht. Die elektrisch leitfaehige Schicht ist als Festelektrode 4 ausgefuehrt und bildet in Verbindung mit dem Spalt und der seismischen Masse 2b des Federteils einen Plattenkondensator. Wirkt nun auf den Sensor, speziell auf die seismische Masse 2b des Federteils eine Beschleunigung, so veraendert sich der Spalt zwischen seismischer Masse 2b und Festelektrode 4 und damit die Kapazitaet. Diese Kapazitaetsaenderung dient als Masz fuer die jeweilige Beschleunigung. Die Einzelteile des Beschleunigungssensors bestehen aus Silizium und werden nach einer mikromechanischen Fertigungstechnologie und Aetztechnik hergestellt und mit Hilfe einer anodischen Verbindungstechnik durch Anlegen einer aeusseren elektrischen Spannung bei erhoehter Temperatur unter Vorspannung der seismischen Masse 2b gefuegt oder durch geeignete Klebeverfahren verbunden. Beim Kleben werden die an den Stirnseiten der Einzelteile vorhandenen Einbettungen bzw. Absaetze genutzt, um eine stabile Verbindung zu erzielen, indem diese Absaetze mit dem Klebemedium ausgefuellt werden.

Bezugzeichen in den Ansprüchen sind zum besseren Verständnis vorgesehen und sollen den Schutzumfang nicht einschränken.

Aufstellung der verwendeten Bezugszeichen

1 Anschlagdeckel
1a Erhoehungen
1b Rand
2a Federn
2b seismische Masse
2c Rahmen
3 Elektrodendeckel
4 Festelektrode
5 elektrisch nicht leitende Schicht
d Drehwinkel
$d_1$, $d_2$, $d_3$ Teilstueck der Durchbrueche
$l_1$, $l_2$ Teillaengen der Federn

**Ansprüche**

1. Kapazitiver mikromechanischer Beschleunigungssensor bestehend aus den Einzelteilen Anschlagdeckel, Federteil und Elektrodendeckel, der nach mikromechanischer Fertigungstechnologie und Aetztechnik hergestellt wird und dessen Einzelteile mit Hilfe einer anodischen Verbindungstechnik durch Anlegen einer ausseren elektrischen Spannung bei erhoehter Temperatur oder durch geeignete Klebeverfahren verbunden werden, gekennzeichnet dadurch, dass der Anschlagdeckel (1) einseitig, symmetrisch teilweise eine Vertiefung besitzt, in der Erhoehungen (1a) vorhanden sind, dass das beidseitig ganz oder teilweise mit einer elektrisch leitfaehigen Schicht beschichtete Federteil, welches aus Rahmen (2c), Federn (2a) und seismischer Masse (2b) besteht, wobei jede Feder in Form eines ebenen Polygonzuges, der aus einer Folge von n geradlinigen Strecken $l_1$, $l_2$ ... $l_n$ besteht, ausgebildet ist, wobei der Anfangspunkt der Strecke $l_{k+1}$ mit dem Endpunkt der Strecke $l_k$ uebereinstimmt (fuer k = 1, 2, 3 ... n-1) und man den Richtungssinn der Strecke $l_{k+1}$ aus der Strecke $l_k$ dadurch gewinnt, dass man die Strecke $l_k$ um einen gerichteten konstanten Winkel dreht, wobei das Drehzentrum der gemeinsame Punkt von $l_k$ und $l_{k+1}$ ist, dass der Drehwinkel fuer den gesamten Polygonzug konstant bleibt und die einzelnen Polygonstrecken sich gegenseitig weder durchdringen noch beruehren, dass mittig des Federteils als Funktionselement eine seismische Masse (2b) angeordnet ist, die bezueglich ihres Masseschwerpunktes an mindestens 2 Federn (2a) aufgehaengt ist, die mit dem Rahmen (2c) des Federteils verbunden sind, wobei die seismische Masse (2b) gegenueber dem Rahmen (2c) des Federteils ein geringeres Niveau aufweist, oder dass mittig des Federteils als Funktionselement ueber eine geschlossene oder mit Durchbruechen versehene duennwandige Folie die seismische Masse (2b) mit dem Rahmen (2c) des Federteils verbunden ist, dass der Elektrodendeckel (3) einseitig symmetrisch mit einer Festelektrode (4), die mit einer elektrisch nicht leitenden Schicht (5) abgedeckt ist, versehen ist.

2. Kapazitiver mikromechanischer Beschleunigungssensor nach Anspruch 1, gekennzeichnet dadurch, dass der Rand (1b) des Anschlagdeckels (1) gegenueber den Erhoehungen (1a) ein geringeres Niveau aufweist.

3. Kapazitiver mikromechanischer Beschleunigungssensor nach Anspruch 1 und 2, gekennzeichnet dadurch, dass die Erhoehungen (1a) aus mindestens 3 Hoeckern, die vorzugsweise auf einer Kreisbahn bezueglich der Mittelachse der seismischen Masse (2b) in gleichmaessigen Abstaenden zueinander angeordnet sind oder aus 2 Schienen bestehen, wobei die Erhoehungen (1a) gegenueber der seismischen Masse (2b) angeordnet sind.

4. Kapazitiver mikromechanischer Beschleunigungssensor nach Anspruch 1 bis 3, gekennzeichnet dadurch, dass die federnd aufgehaengte seismische Masse (2b) die gleiche Dicke wie das Federteil besitzt und sich im Elektrodendeckel (3) symmetrisch eine grubenfoermige Vertiefung befindet, auf deren Grund die Festelektrode (4) angeordnet ist.

5. Kapazitiver mikromechanischer Beschleunigungssensor nach Anspruch 1 bis 4, gekennzeichnet dadurch, dass die Einzelteile Anschlagdeckel (1) und Federteil unter Vorspannung der seismischen Masse (2b) gefuegt sind.

6. Kapazitiver mikromechanischer Beschleunigungssensor nach Anspruch 1 bis 5, gekennzeichnet dadurch, dass die Einzelteile Anschlagdeckel (1), Federteil und Elektrodendeckel (3) durch die in den Seiten vorhandenen Einbettungen gefuegt werden.

7. Kapazitiver mikromechanischer Beschleunigungssensor nach Anspruch 1 - 6, gekennzeichnet dadurch, dass die Aussenflaechen von Anschlagdeckel (1) und Elektrodendeckel (3) mit einer elektrisch leitfaehigen Schicht versehen sind und beide Potentiale elektrisch miteinander verbunden sind.

8. Kapazitiver mikromechanischer Beschleunigungssensor nach Anspruch 1 bis 6,

gekennzeichnet dadurch, dass der Anschlagdeckel (1), das Federteil und der Elektrodendeckel (3) aus Silizium, Glas oder Keramik bestehen.

Fig. 1

Fig. 2

Fig. 3

Europäisches
Patentamt

**EUROPÄISCHER RECHERCHENBERICHT**

Nummer der Anmeldung

EP 90 10 6957

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 694 687 (BONIN et al.)<br>* Spalte 5, Zeilen 11-25; Figur 3 *<br>--- | 1,4 | G 01 P 15/125 |
| A | US-A-4 732 647 (H.E. AINE)<br>* Spalte 5, Zeilen 50-63; Figur 5 *<br>--- | 1,8 | |
| A | FR-A-2 602 055 (MBB)<br>* Seite 2, Zeilen 1-14; Figuren 1-4 * &<br>DE-A-3 625 411 (Kat. D)<br>--- | 1,8 | |
| A | DE-A-3 719 037 (LITTON SYSTEMS INC.)<br>* Spalte 14, Zeile 62 - Spalte 15,<br>Zeile 10; Figuren 7-11 *<br>--- | 1,8 | |
| A | GB-A-2 101 336 (CENTRE ELECTRONIQUE)<br>* Seite 1, Zeilen 48-61; Figur 1 * &<br>DE-A-3 223 987 (Kat. D)<br>----- | 1,8 | |

| | RECHERCHIERTE SACHGEBIETE (Int. Cl.5) |
|---|---|
| | G 01 P |

Der vorliegende Recherchenbericht wurde für alle Patentansprüche erstellt

| Recherchenort | Abschlußdatum der Recherche | Prüfer |
|---|---|---|
| DEN HAAG | 24-08-1990 | HANSEN P. |